# EUROPÄISCHE PATENTANMELDUNG

(11) **EP 4 848 076 A1**
(43) Veröffentlichungstag der Anmeldung: **02.12.2026**
(21) Anmeldenummer: 25179537.3
(22) Anmeldetag: 28.05.2025
(51) Int. Cl.: G06F 8/61, H04L 9/32

(54) **FEHLERGESICHERTE INSTANZIIERUNG VON ZUSATZ-CONTAINERN IN CONTAINERISIERTEN ANWENDUNGEN**

(71) Anmelder: Siemens Aktiengesellschaft, 80333 München (DE)
(72) Erfinder: Knierim, Christian, 81373 München (DE)
(74) Vertreter: Siemens Patent Attorneys

(57) **Zusammenfassung**

Die Erfindung geht einer Deployment-Konfiguration für eine containerisierte Anwendung mit Beschränkung der Instanziierung eines Zusatz-Containers. Bei dieser Deployment-Konfiguration sind ein Haupt-Container-Image und ein verschlüsselten Zusatz-Container-Image für das Deployment vorgesehen. Zudem ist die Deployment-Konfiguration mit einem Schlüssel zur Entschlüsselung des Zusatz-Container-Images und mit einer eine Referenz auf die Anwendung zulässiger Schlüssel von Zusatz-Container-Images enthaltenden Signatur versehen. Bei der Instanziierung der containerisierten Anwendung durch einen Orchestrator kann sowohl die Signatur der Deployment-Konfiguration als auch die Zulässigkeit des Schlüssels zur Entschlüsselung des Zusatz-Container-Images (letzteres mit Hilfe der Referenz auf für die Anwendung zulässige Schlüssel von Zusatz-Container-Images) validiert werden. Die Verwendung von Zusatz-Containern kann so auf explizit autorisierte Nutzungen beschränkt werden.

## Beschreibung

Die Erfindung betrifft ein Verfahren zur Erstellung einer Deployment-Konfiguration für eine containerisierte Anwendung, ein Verfahren zur Instanziierung einer containerisierten Anwendung mit einer erfindungsgemäß erstellten Deployment-Konfiguration durch einen Orchestrator (z.B. eine Kubernetes Control Plane oder ein sonstiges zentrales Management System für die Verwaltung der Ausführungsumgebungen), eine erfindungsgemäß erstellte Deployment-Konfiguration und einen Orchestrator, welcher zur Durchführung eines erfindungsgemäßen Verfahrens ausgebildet ist.

Containerisierte Anwendungen bzw. Applikationen bestehen aus mindestens einem Container-Image bzw. einem Container-Abbild und einer Deployment- bzw. Instanziierungsinformation (z.B. einem Docker-Compose-File, einem Helm-Chart oder einem Kubernetes-Manifest).

Die Container-Images und die Deployment-Information bilden ggf. zusammen mit weiteren Informationen die Gesamtapplikation, welche z.B. durch ein Applikationsbündel, oder konkreter eine (Industrial) Edge App repräsentiert wird.

Übliche Applikationspattern zur Bereitstellung privilegierter Operationen und Services sind für solche containerisierte Applikationen so genannte Sidecar-Pattern (unten auch als "Sidecar-Container" bezeichnet) oder auch die Verwendung eines Init-Containers. Bei beiden Varianten handelt es sich um Container-Instanzen, welche entweder vor dem Start der Workload-Instanz (Init-Container) oder parallel zum Workload-Container (Sidecar) mit höheren Privilegien ausgeführt werden können. Der Workload-Container kann auch als Hauptcontainer gesehen werden. Typischerweise handelt es sich um den Container mit der eigentlichen Applikation.

Hierdurch können beide Varianten für den eigentlichen Workload-Container bzw. Hauptcontainer privilegierte Operationen bereitstellen. Diese können auch von anderen Herstellern als dem des eigentlichen Workload-Containers bereitgestellt werden.

Im Falle einer (Industrial-)Edge-App ist es beispielsweise möglich, dass für die Durchführung privilegierter Operationen die Plattform bestimmte Sidecar- oder Init-Container bereitstellt und diese auch, z.B. auf Basis ihrer Image-Signatur, höhere Ausführungsprivilegien (z.B. Linux-Capabilities, Runtime-User, Verwendung von Linux Host-Namespaces o.ä.) zugewiesen bekommen können, d.h. höhere Privilegien als die, über welche ein "normaler" Workload-Container verfügen darf, da dieser nicht von einer Entität signiert wurde, welche die Verwendung solcher höheren Privilegien erlaubt. Die Privilegien enthält ein normaler Workload-Container vorzugsweise nicht, da sonst die Isolation zum darunterliegenden System (zumindest teilweise) aufgebrochen werden würde und somit potenziell von einem Angreifer größerer Schaden diese oder andere auf dem gleichen System betriebene Applikationen angerichtet werden könnte.

Werden solche Init- und Sidecar-Container bereitgestellt, soll aber gleichzeitig die Verwendung dieser eingeschränkt werden, sodass z.B. eine (Industrial Edge) App 1 Sidecar A verwenden darf, eine weitere (Industrial Edge) App 2 jedoch nicht, sondern nur Sidecar-Container B und C und Init-Container D.

Grund hierfür ist, dass nicht jeder App-Hersteller die unterschiedlichen Kategorien vorgefertigter Init- und Sidecar-Container verwenden soll.

Die Erfindung hat zur Aufgabe, zur plangemäßen Instanziierung von containerisierten Anwendungen beizutragen.

Die Aufgabe wird durch ein Verfahren zur Erstellung einer Deployment-Konfiguration für eine containerisierte Anwendung nach Anspruch 1, ein Verfahren zur Instanziierung einer containerisierten Anwendung mit einer erfindungsgemäß erstellten Deployment-Konfiguration durch einen Orchestrator nach Anspruch 5, eine erfindungsgemäß erstellte Deployment-Konfiguration nach Anspruch 10 und einen Orchestrator nach Anspruch 11, welcher zur Durchführung eines erfindungsgemäßen Verfahrens ausgebildet ist, gelöst.

Vorteilhafte Weiterbildungen sind in den Unteransprüchen angegeben.

Es wird ein Verfahren zur Erstellung einer Deployment-Konfiguration für eine containerisierte Anwendung mit Beschränkung der Instanziierung eines Zusatz-Containers vorgeschlagen. Der Begriff "Deployment-Konfiguration" bezieht sich auf einen Input für die Instanziierung von einer containerisierten Anwendung, welcher beispielsweise durch Referenzierung von Container-Images und Spezifizierung erforderlicher Ressourcen und ggf. Privilegien den Zugriff auf die Container-Images, die Erzeugung bzw. Bereitstellung der Ressourcen und die Zuweisung der Privilegien durch einen Orchestrator für die Realisierung der Anwendung in einer Laufzeitumgebung ermöglicht. Ein derartiger Input kann beispielsweise auch ein sog. Applikationsbündel (Application Bundle) sein. Das Applikationsbündel enthält in der Regel die Images und die Deployment-Konfiguration oder kann diese referenzieren. Die beschriebene Erfindung funktioniert auch, wenn anstelle der Deployment-Konfiguration ein Applikationsbündel substituiert wird. Dieser Fall ist Teil der Erfindung. In den Ansprüchen und der zugehörigen Beschreibung ist der Begriff "Deployment-Konfiguration" als "Deployment-Konfiguration oder Applikationsbündel" zu verstehen. Explizit wurde der Begriff "Applikationsbündel" nur in den Anspruch 10 aufgenommen, um die Lesbarkeit der anderen Ansprüche nicht zu beeinträchtigen.

Die erfindungsgemäße Erstellung einer Deployment-Konfiguration umfasst das Vorsehen eines Haupt-Container-Images und eines verschlüsselten Zusatz-Container-Images für das Deployment bzw. die Instanziierung. Darunter ist zu verstehen, dass mit Hilfe der Deployment-Konfiguration der Orchestrator auf die (z.B. in einer sog. Registry bereitgestellten) Images zugreifen kann. Dazu erfolgt typischerweise eine Referenzierung in der Deployment-Konfiguration. Es ist aber prinzipiell nicht ausgeschlossen, Images selbst als Bestandteil oder Anhang der Deployment-Konfiguration dem Orchestrator zu übermitteln. Eine derartige Realisierung ist im Zuge der Auslegung des Begriffs "Vorsehen" als durch die Ansprüche mitumfasst zu interpretieren. Das Wort "ein" in den Ansprüchen ist als unbestimmter Artikel zu verstehen und im Sinne von "mindestens ein" auszulegen. Insb. kann die Erstellung einer Deployment-Konfiguration mit einer Mehrzahl von Images (Haupt-Container-Images und/oder Zusatz-Container-Images) vorgesehen sein. Das verschlüsselte Zusatz-Container-Image kann durch Signieren des Images mit einem (privaten) Schlüssel, der dem Ersteller des Zusatz-Containers zugeordnet ist, erfolgt sein.

Der Begriff "Haupt-Container" bezieht sich auf den Kern der Realisierung der Anwendung. Insb. ist damit ein Container gemeint, der notwendigerweise von dem Ersteller der Anwendung kommt und der typischerweise fest an die Anwendung gebunden ist. Dagegen bezeichnet der Begriff "Zusatz-Container" auf einen für die Anwendung weniger zentralen Container, der beispielsweise für verschiedene Anwendungen verwendet werden kann. Beispiele für Zusatz-Container sind sog. Init-Container oder Sidecar-Container. Insb. soll der Begriff "Zusatz-Container" auch Container bezeichnen, die aufgrund ihrer Struktur bzw. Funktion nicht von dem Ersteller der Anwendung bzw. des Haupt-Containers kommen müssen, sondern auch von Dritter Seite bereitgestellt (und ggf. von dem Anwendungsersteller für eine anwendungsbezogene Verwendung validiert bzw. zertifiziert) sein können.

Erfindungsgemäß wird die Deployment-Konfiguration mit einem Schlüssel zur Entschlüsselung des Zusatz-Container-Images versehen. Dabei kann es sich z.B. um einen öffentlichen Schlüssel eines asymmetrischen Schlüsselpaars handeln, aber auch ein symmetrischer Schlüssel ist vorstellbar. Der Schlüssel ist vorzugsweise Bestandteil der Deployment-Konfiguration, aber auch eine Referenz auf einen zugängig außerhalb der Deployment-Konfiguration vorgehaltenen Schlüssel ist möglich, was auch unter die gewählte Formulierung zu subsumieren ist. Das wäre z.B. der Fall bei einem externen Secrets-Management-System (z.B. HashiCorp Vault) oder das System "Kubernetes Secrets". Hierbei werden innerhalb des Orchestrators abgespeicherte Secrets bzw. Geheimnisse verwendet, die von der Deployment-Konfiguration referenziert und somit dann eingebunden werden können.

Schließlich erfolgt ein Signieren der Deployment-Konfiguration mit einer Signatur, die eine Referenz auf für die Anwendung zulässige Schlüssel (evtl. auch nur ein einziger Schlüssel) von Zusatz-Container-Images enthält. Die Referenz kann eine Liste mit Informationen zu (den) zulässigen Schlüsseln umfassen. Diese Informationen ermöglichen eine Validierung der zulässigen Schlüssel, entweder indem schlüsselbezogene Validierungsinformationen (z.B. Hash-Wert über Schlüssel) enthalten oder referenziert werden.

Die Erfindung umfasst auch ein Verfahren zur Instanziierung einer containerisierten Anwendung mit Hilfe einer nach einem erfindungsgemäßen Verfahren erstellten Deployment-Konfiguration durch einen Orchestrator (an welchen die Deployment-Konfiguration übergeben wurde), welches die Validierung der Signatur der Deployment-Konfiguration und die Validierung der Zulässigkeit des Schlüssels zur Entschlüsselung des Zusatz-Container-Images mit Hilfe der Referenz auf für die Anwendung zulässige Schlüssel von Zusatz-Container-Images beinhaltet. Dabei bedeutet "durch einen Orchestrator" nicht notwendigerweise, dass die Validierung (und etwaige weitere Maßnahmen wie die Zuteilung von Privilegien) durch den Orchestrator selbst durchgeführt wird. Eine oder beide Validierungen können auch durch Orchestrator-externe Dienste bzw. Komponenten erfolgen, denen der Orchestrator vertraut und auf die er zu diesem Zweck zugreift (z.B. Admission Controller bei Kubernetes als Orchestrator). Auch ist eine Validierung durch einen dem eigentlichen Orchestrator vorgelagterten Dienst möglich. Auch dies ist eine Realisierung, die unter den Anspruchswortlaut zu subsumieren ist.

Gemäß einer Weiterbildung verfügt der Orchestrator über eine Policy für Zusatz-Container, und es werden dem Zusatz-Container-Image Privilegien nach Maßgabe dieser Policy zugewiesen. Dies erfolgt z.B. im Zuge der Instanziierung durch eine eigene Policy-Komponente bzw. einen Policy-Dienst, z.B. Open Policy Agent oder Kyverno. Dann können für den Haupt-Container und den Neben-Container separate Validierungen der sich unterscheidenden Privilegien im Zuge einer Ausgestaltung des erfindungsgemäßen Verfahrens vorgesehen sein. Alternativ kann für Zusatz-Container bzw. der Privilegien eine Standardeinstellung vorgesehen sein, z.B. dass es diesbezüglich keine Einschränkung gibt.

Es kann vorgesehen sein, dass eine Fehlermeldung ausgegeben wird, wenn die Validierung der Zulässigkeit des Schlüssels zur Entschlüsselung des Zusatz-Container-Images nicht erfolgreich ist.

Gegenstand der Erfindung ist auch eine Deployment-Konfiguration, welche nach einem erfindungsgemäßen Verfahren erhalten wurde und ein Orchestrator, welcher zur Durchführung eines erfindungsgemäßen Verfahrens ausgestaltet ist. Als Orchestrator ist hierbei jedes Management-System zu verstehen, dass mit Hilfe eine Deployment-Konfiguration die Ausführung einer Anwendung in einer Laufzeitumgebung ermöglicht.

Die Erfindung erlaubt ein Berechtigungsmanagement für Zusatz-Container bzw. eine Beschränkung der Verwendung von Zusatz-Containern und schlägt insbesondere auch eine Lösung vor, mit Hilfe derer innerhalb einer containerisierten Applikation bzw. Anwendung die Verwendung anderer (z.B. Sidecar- oder Init-) Container-Images für die jeweilige Gesamtapplikation erlaubt oder verweigert werden kann.

Die Erfindung wird im Folgenden im Rahmen eines Ausführungsbeispiels anhand von Figuren näher erläutert. Es zeigen
Fig. 1: eine beispielhafte Deployment-Konfiguration bzw. ein beispielhaftes Applikationsbündel,
Fig. 2: eine Architekturübersicht eines Orchestrators und einer Laufzeitumgebung,
Fig. 3: eine Ablaufbeschreibung der Validierung auf der Containerlaufzeitumgebung,
Fig. 4: einen Ablauf des Signaturverfahrens zwischen dem Ersteller des Sidecars/Init-Containers, des App-Erstellers und dem Signaturservice und
Fig. 5: ein Beispiel für ein Managementsystem, bei dem die Erfindung Verwendung finden kann.

Ein grundlegender Gedanke des Verfahrens besteht darin, dass eine signierte Deployment-Konfiguration oder ein Applikationsbündel neben dem eigentlichen Haupt-Container einen zentralen, verschlüsselt zur Verfügung gestellten Init-Container oder ein Sidecar referenziert und mit Hilfe der Zuweisung von Prozessprivilegien und darunterliegenden Ressourcen wie z.B. Dateisystemressourcen instanziiert. Hierfür wird innerhalb der Deployment-Konfiguration oder des Applikationsbündels ein entsprechend vom Hersteller des Init-Containers oder Sidecars signierter Schlüssel zur Entschlüsselung mitgeliefert, welcher über die Metadaten der Signatur (z.B. über ein entsprechendes Feld, welches eine eindeutige Org-ID referenziert, Hash über den Schlüssel, ...) der Deployment-Konfiguration autorisiert wird.

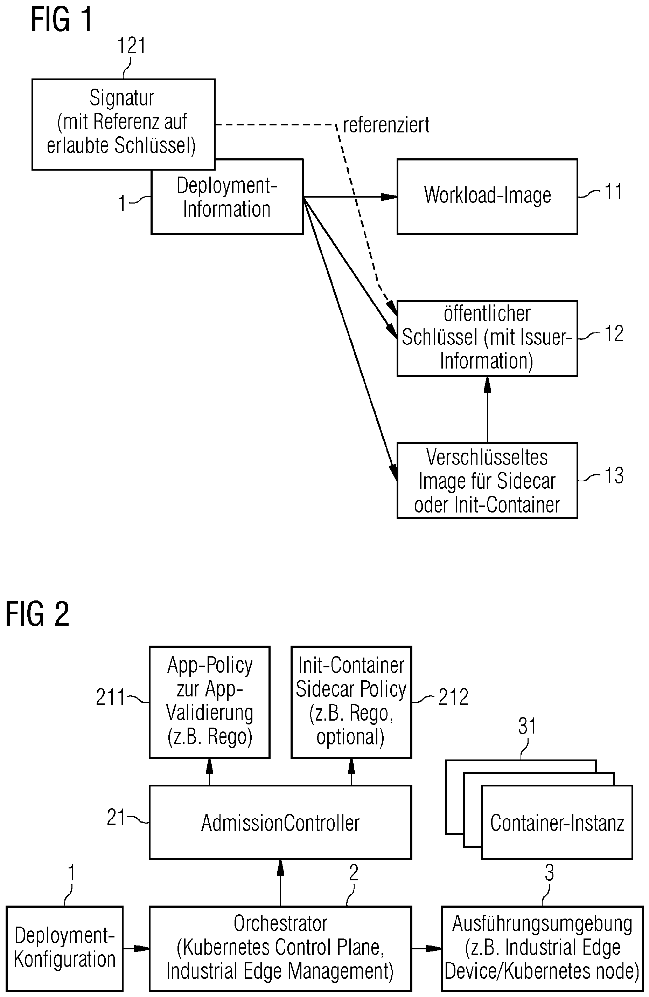

Ein solches Applikationsbündel bzw. eine solche Deployment-Konfiguration ist in Fig. 1 dargestellt. Die Deployment-Konfiguration 1 bzw. die Deployment-Informationen umfassen ein Workload-Image bzw. Haupt-Image 11. Durch diese werden in der Regel Basis-Operationen bzw. Basis-Dienste bereitgestellt. Zusätzlich enthält die Deployment-Konfiguration 1 ein Image 13 (Zusatz-Image) für einen Sidecar- oder Init-Container. Damit sind zu den Basis-Operationen bzw. Basis-Diensten zusätzliche (evtl. fakultative) Operation bzw. Dienste realisierbar. Das Image 13 ist erfindungsgemäß verschlüsselt. Der zugehörige öffentliche Schlüssel 12 (zusammen mit Herausgeber-Informationen) 12 ist ebenfalls Bestandteil der Deployment-Konfiguration 1. Der Schlüssel ist signiert; die Signatur 121 enthält eine Referenz auf erlaubte Schlüssel.

Dieses Applikationsbündel bzw. diese Deployment-Konfiguration 1 wurde z.B. von einem App-Hersteller erstellt und nach Fertigstellung entsprechend signiert und an eine zentral gemanagte (ggf. orchestrierte) Laufzeitumgebung übergeben.

Eine beispielhafte orchestrierte Laufzeitumgebung ist in Fig. 2 dargestellt. Das Konzept zur Instanziierung sieht vor, dass die signierte Deployment-Konfiguration bzw. das signierte Applikationsbündel 1 an ein Managementsystem bzw. einen Orchestrator 2 übergeben wird. Dieser leitet die Deployment-Konfiguration bzw. das Applikationsbündel - wie z.B. im Falle von Kubernetes üblich - an einen Admission-Controller 21, wie z.B. einen sog. Open-Policy-Agent-Gatekeeper, weiter. Im Rahmen des hier beschriebenen Verfahrens wird zunächst die Signatur validiert und in Abhängigkeit dieser zunächst überprüft, ob die Instanziierungsinformation für den eigentlichen Workload-Container in Ordnung ist. Es wird hierbei auch überprüft, ob entsprechende Init-Container oder Sidecars vorhanden sind und für diese entsprechend signierte Entschlüsselungsschlüssel hinterlegt sind und diese auch in der Signatur der Deployment-Konfiguration bzw. des Applikationsbündels entsprechend z.B. über eine Org-ID oder einen eindeutigen String, den Signatur-Hash o.ä. entsprechend referenziert und somit autorisiert sind.

Zu dieser im ersten Schritt durchgeführten Validierung wird die auf Fig. 2 gezeigte App-Policy 211 verwendet, wobei z.B. mit Hilfe von der Software bzw. des Policy-Agents "Open Policy Agent" (OPA) validiert werden kann und in diesem Ausführungsbeispiel in der Programmiersprache Rego implementiert ist.

Wird innerhalb während dieser ersten Analyse festgestellt, dass ein Init-Container oder ein Sidecar eines Fremdherstellers verwendet wird (z.B. durch die Referenzierung des imagespezifischen Entschlüsselungs-Schlüssels oder durch die Verwendung entsprechender Metadaten innerhalb der Instanziierungsinformation (z.B. spezifische Instanz-Tags) oder einer wohldefinierten Beschreibung in der Pod-Beschreibung bei Kubernetes), kann innerhalb der Init-Container/Sidecar-Policy 212 zusätzlich eine Entschlüsselungskey-spezifische Validierung mit Hilfe einer weiteren Policy durchgeführt werden. Auf Basis des Schlüssels können diese Images dann anders validiert werden, somit andersartig als die weiteren, innerhalb der Deployment-Konfiguration spezifizierten Workload-Container, und folglich auch höher privilegiert werden.

Alternativ kann für solche Container-Instanzen auch implizit definiert sein, dass für diese keine Policy-Einschränkungen bzgl. der Validierung gelten, sondern diese immer beliebig vom App-Hersteller instanziiert werden können.

Die Verwendung verschlüsselter Images für Sidecars und Init-Container hat hierbei den Vorteil, dass diese auch innerhalb des gleichen Applikationsbündels und auch innerhalb der gleichen Registry verwendet werden können und somit der App-Entwickler eine vordefinierte Komponente verwenden kann, ohne dass diese z.B. in einem eigenen Repository (d.h. einer zusammengehörigen Gruppe von Images in einem Registry; d.h. das Repository ist ein Teil bzw. eine Struktur eines Registry) hinterlegt werden muss.

Im Rahmen des Ausführungsbeispiels wird hierbei angenommen, dass, auch wenn nichtbefugte andere Applikationsentwickler Zugriff auf die Entschlüsselungsschlüssel erhalten, diese immer innerhalb der Management-Komponente bzw. dem Orchestrator 2 validiert werden, und somit zunächst über die Signatur des Applikations-Bündels bzw. der Deployment-Konfiguration 1 validiert werden kann, ob die bzw. der Schlüssel überhaupt verwendet werden dürfen bzw. darf.

Sind beide Validierungen innerhalb des Admission-Controllers 21 abgeschlossen, wird die komplette Deployment-Konfiguration 1 an die Management-Komponente 2 zurückgegeben. Anschließend wird die Instanziierung der Applikation in der innerhalb der Deployment-Konfiguration 1 beschriebenen Startreihenfolge durchgeführt.

Wird der zu startenden Instanz ein falscher Schlüssel zur Verfügung gestellt, wird der Startvorgang mit einer entsprechenden Fehlermeldung abgebrochen. Gleiches gilt für die Zuweisung nicht-autorisierter Entschlüsselungs-Schlüssel oder der Zuweisung nicht-zulässiger Privilegien.

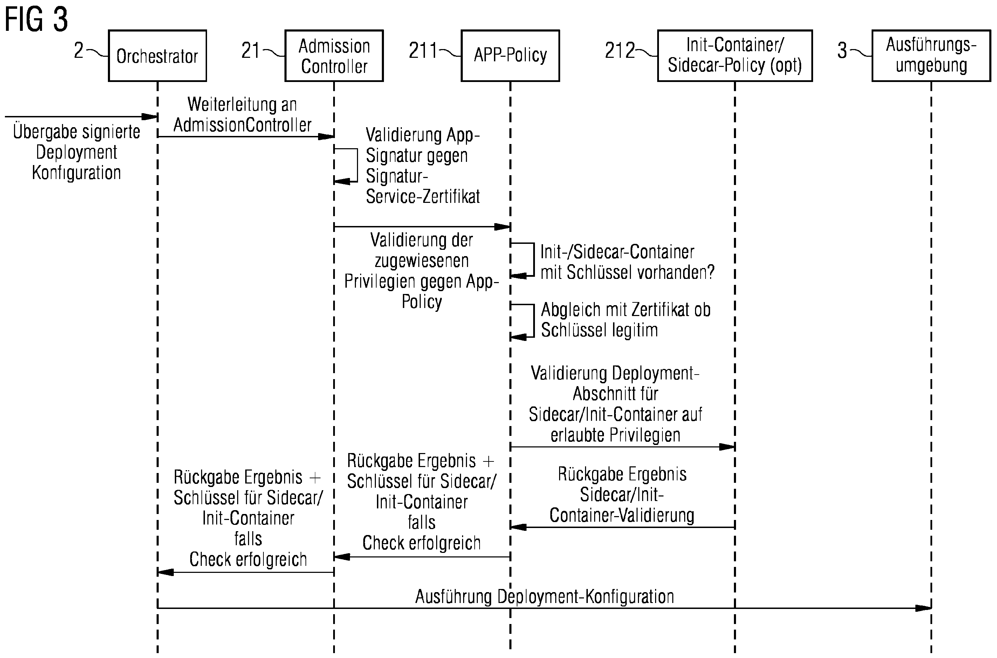

Der hier beschriebene Validierungs- und Startvorgang ist auch in Fig. 3 graphisch dargestellt. Es werden folgende Schritte durchgeführt:
a) Übergabe einer signierten Deployment-Konfiguration, die für eine App erstellt wurde, an den Orchestrator 2
b) Weiterleitung der Deployment-Konfiguration an den Admission-Controller 21
c) Validierung der dem App-Ersteller zugeordneten Signatur der Deployment-Konfiguration gegen ein entsprechendes Zertifikat eines Signatur-Dienstes durch den Admission-Controller 21
d) Validierung der dem Workload-Container zugewiesenen Privilegien gegen die verwendete App-Policy durch die App-Policy-Komponente 211
e) Im Rahmen der Validierung unter d) Überprüfung, ob die Deployment-Konfiguration einen Init- bzw. Sidecar-Container mit Schlüssel und Signatur umfasst
f) Im Rahmen der Validierung unter d) Durchführung eines Abgleichs der Signatur mit einem zugehörigen Zertifikat zur Überprüfung, ob der Schlüssel legitim ist
g) Übergabe des Abschnitts der Deployment-Konfiguration mit Init- bzw. Sidecar-Container an die Init-Container/Sidecar-Policy-Komponente 212 und Validierung der Privilegien gegen die entsprechende Policy
h) Rückgabe des Ergebnisses der Validierung der Privilegien an die App-Policy-Komponente 211
i) Rückgabe der Validierungs-Ergebnisse und des Entschlüsselungs-Schlüssels für den Init- bzw. Sidecar-Container (falls Validierung erfolgreich)
j) Übergabe der Deployment-Konfiguration von dem Orchestrator 2 an die Ausführungsumgebung 2 und Ausführung von der Deployment-Konfiguration

Sowohl für die Signaturschlüssel als auch die image-spezifischen Entschlüsselungsschlüssel wird im Rahmen des Ausführungsbeispiels angenommen, dass diese über asymmetrische Verschlüsselungsverfahren implementiert werden und somit auch - wie bei Zertifikaten üblich - eine Chain of Trust bzw. Vertrauenskette hergestellt werden kann. Hierdurch kann auch die Autorisierung der Entschlüsselungs-Schlüssel nicht direkt in der Signatur des Applikationsbündels selbst, sondern auch innerhalb der darüberliegenden Zertifizierungsstelle vorgenommen werden.

Die Verwendung einer zentralen Zertifizierungsstelle hat den Vorteil, dass diese dem App-Ersteller selbst eine Sub-Zertifizierungsstelle (Sub-CA) ausstellt und darüber die Entschlüsselungs-Schlüssel autorisiert werden, also gleichzeitig der App-Ersteller immer wieder die Freiheit hat, seine Applikation selbst zu signieren, ohne auf einen zentralen Signaturservice angewiesen zu sein.

Wird die Autorisierung nicht über die Sub-CA hergestellt, muss die Autorisierung der Schlüssel der zentrale Signaturservice durchführen, d.h. sie kann nicht beim App-Ersteller erfolgen, da dieser andernfalls Entschlüsselungsschlüssel für die Init-Container und Sidecars autorisieren könnte, für welche er nicht berechtigt werden soll.

Ist das vorgeschlagene Signatur-Verfahren implementiert, können die Entschlüsselungs-Schlüssel prinzipiell auch symmetrisch sein. Diese müssen jedoch eindeutig in der App-Signatur oder in der Signatur des App-Erstellers eindeutig hinterlegt sein.

Wird ein Chain-of-Trust-Verfahren implementiert, muss es möglich sein, dass der Admission-Controller die vollständige Zertifizierungskette bis zum zentralen Signaturservice validieren kann. Hierfür ist der zentrale Trust-Anker im Admission-Controller hinterlegt. Ggf. sind die jeweiligen herstellerspezifischen Sub-Zertifizierungsstellen innerhalb der Deployment-Konfiguration oder im Applikationsbündel ebenfalls hinterlegt.

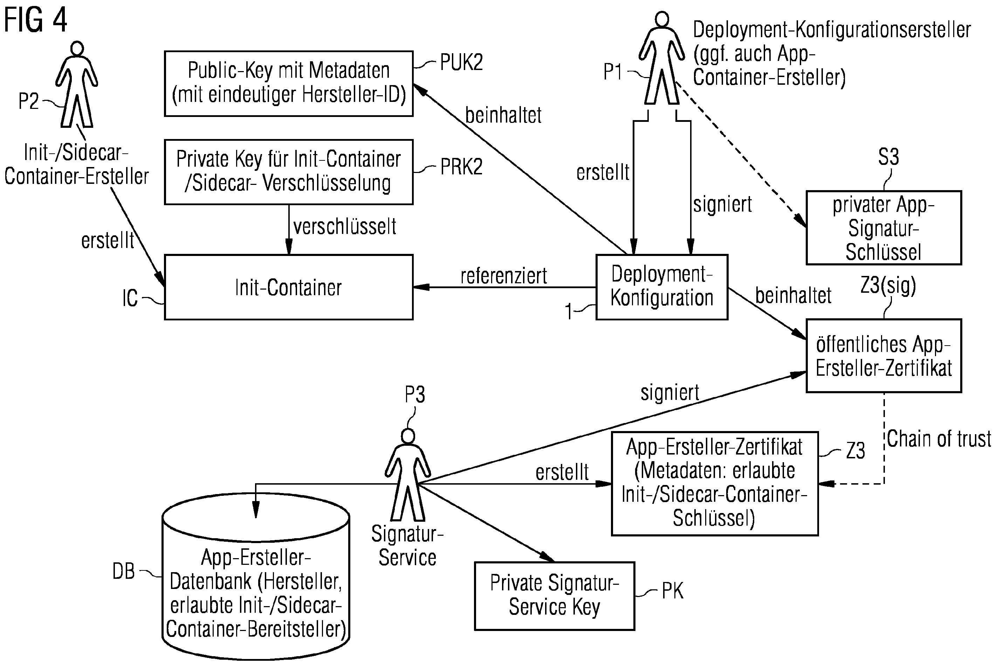

Die Erstellung der Vertrauensbeziehungen zwischen dem Ersteller des Init-/Sidecar-Containers, der zentralen Zertifizierungsstelle und dem App-Entwickler ist auch in Fig. 4 graphisch dargestellt.

In Fig. 4 werden drei Parteien unterschieden, der Deployment-Konfigurationsersteller P1, der Init-/Sidecar-Container-Ersteller P2 und der Signatur-Dienst P3. Dabei ist angenommen, dass der Signatur-Dienst P3 eine dem App-Ersteller ausgestellte Sub-Zertifizierungsstelle (Sub-CA) ist und darüber die Entschlüsselungs-Schlüssel autorisiert werden. Bei dem Deployment-Konfigurationsersteller P1 kann es sich auch um den App-Ersteller handeln, d.h. die Parteien P1 und P2 können zusammenfallen. Entscheidend ist hier, wie bzw. in welchem Rahmen von der Partei 3 erstellte Init-/Sidecar-Container bei APPs eingebunden werden. Durch das in Fig. 4 dargestellte Konzept kann der APP-Hersteller darauf Einfluss nehmen.

In Fig. 4 ist exemplarisch ein Init-Container IC gezeigt, der von dem Init-/Sidecar-Container-Ersteller P2 stammt. Dieser verfügt zudem über ein asymmetrisches Schlüsselpaar mit einem privaten Schlüssel PRK2, der für die Verschlüsselung von Init-Container bzw. Sidecar-Container verwendet wird, und einem öffentlichen Schlüssel PUK2, der mit Metadaten versehen ist, die eine eindeutige Hersteller-Identifikationsinformation umfassen. Der Schlüssel PRK2 wird in die Deployment-Konfiguration 1 eingebaut, welche den Init-Container IC referenziert. Die Deployment-Konfiguration 1 wird mittels eines privaten App-Signatur-Schlüssels S3 signiert. Die Signatur beinhaltet ein öffentliches App-Ersteller-Zertifikat Z3(sig), welches sich über eine Chain of Trust aus einem App-Ersteller-Zertifikat Z3 ableitet. Dieses enthält Metadaten mit erlaubten Schlüsseln des Init-/Sidecar-Container-Erstellers. Für die Signatur, die das öffentliche App-Ersteller-Zertifikat Z3(sig) verwendet, liegt ein privater Signatur-Service-Key PK vor. Erlaubte Schlüssel werden nach Informationen aus einer Datenbank DB festgelegt, welche dem App-Ersteller zugeordnet ist und Daten über Hersteller und erlaubte Init-/Sidecar-Bereitsteller enthält.

Das Vorgehen im Rahmen des Ausführungsbeispiels hat u.a. folgende Merkmale bzw. Vorteile:
- Über die vom Signaturservice ausgestellte App-Ersteller-CA wird definiert, von welchen Herstellern Entschlüsselungszertifikate für die Init-Container und Sidecars verwendet werden dürfen.
- Für die Init-Container und Sidecars kann aufgrund des Entschlüsselungszertifikates optional ein angepasstes Privilegienmanagement mit Hilfe einer entsprechenden, herstellerspezifischen Init- und Sidecar-Container-Policy am Orchestrator durchgeführt werden.
- Sofern die Deployment-Konfigurationen ausschließlich auf dem Orchestrator persistiert werden und angenommen wird, dass andere containerisierten Applikationsbündel keinen Zugriff auf die Entschlüsselungszertifikate erlangen, kann verhindert werden, dass die verschlüsselten Init-Container lokal verwendet werden.
- Die Benutzung des öffentlichen Entschlüsselungsschlüssel wird über eine Referenz innerhalb des Herstellerzertifikates des App-Herstellers autorisiert.

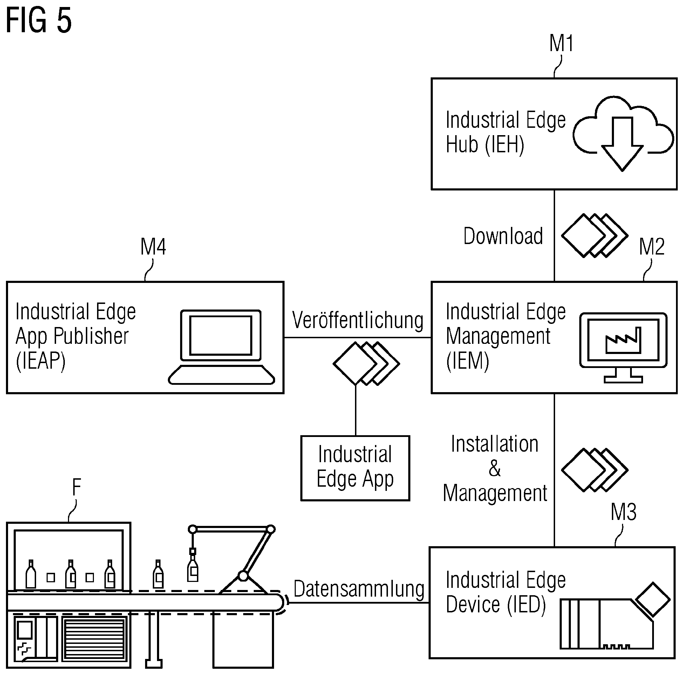

In Fig. 5 ist ein verteilt aufgebautes Management-System (Industrial Edge) gezeigt, für welches die Erfindung zum Einsatz kommen kann. Es handelt sich um ein Konzept der Firma Siemens, welche Produkte für dessen Realisierung (HW und SW) vertreibt. Dabei ist die Ver- bzw. Bearbeitung von Daten vorgesehen, die aus einer Fabrik stammen. Das Management-System umfasst folgende Komponenten:
Industrial Edge Hub (IEH)
   Der "Industrial Edge Hub" M1 ist der Ausgangspunkt für das Herunterladen von Software (z.B. Betriebssystem) für die "Industrial Edge Management" Komponente und deren Konfiguration.
Industrial Edge Management (IEM)
   Das "Industrial Edge Management" M2 ist die zentrale Infrastruktur-Komponente zum Managen sowohl von verbundenden "Edge Devices" als auch "Edge Apps". Z.B. werden "Edge Apps" über das Industrial Edge Management M2 auf den Edge Devices installiert.
Industrial Edge Devices (IED)
   Industrial Edge Devices M3 sammeln Daten z.B. von einer Fabrik F oder Fertigungsabschnitten einer Fabrik und bearbeiten, verarbeiten oder kontrollieren sie mittels Edge Apps.
Industrial Edge App Publisher (IEAP)
   Über den "Industrial Edge App Publisher" M4 werden Edge Apps konzipiert und auf das Industrial Edge Management M2 übertragen.

Die Edge Apps werden typischerweise als containerisierten Anwendungen bereitgestellt. Das IEM operiert dann als Orchestrator für die Ausführung von Apps in einer Laufzeitumgebung der IEDs.

Alle Vorrichtungselemente IEH, IEM, IED und IEAP sind mittels geeigneter Hardware realisiert. D.h., hinter diesen Elementen stehen typischerweise Rechner mit CPU oder MCU, Speicher, Schnittstellen etc.

## Patentansprüche

1. Verfahren zur Erstellung einer Deployment-Konfiguration für eine containerisierte Anwendung mit Beschränkung der Instanziierung eines Zusatz-Containers, umfassend
- Vorsehen eines Haupt-Container-Images für das Deployment;
- Vorsehen eines verschlüsselten Zusatz-Container-Images für das Deployment;
- Versehen der Deployment-Konfiguration mit einem Schlüssel zur Entschlüsselung des Zusatz-Container-Images; und
- Signieren der Deployment-Konfiguration mit einer eine Referenz auf für die Anwendung zulässige Schlüssel von Zusatz-Container-Images enthaltenen Signatur.

2. Verfahren nach Anspruch 1,
**dadurch gekennzeichnet, dass**
es sich bei dem Zusatz-Container um einen Container des Typs Init-Container oder Sidecar-Container handelt.

3. Verfahren nach einem der Ansprüche 1 oder 2,
**dadurch gekennzeichnet, dass**
es sich um den öffentlichen Schlüssel eines asymmetrischen Schlüsselpaars handelt.

4. Verfahren nach einem der Ansprüche 1 oder 2,
**dadurch gekennzeichnet, dass**
es sich um einen symmetrischen Schlüssel handelt.

5. Verfahren zur Instanziierung einer containerisierten Anwendung mit Hilfe einer nach einem Verfahren nach einem der Ansprüche 1 bis 4 erstellten Deployment-Konfiguration durch einen Orchestrator, umfassend
- Validierung der Signatur der Deployment-Konfiguration; und
- Validierung der Zulässigkeit des Schlüssels zur Entschlüsselung des Zusatz-Container-Images mit Hilfe der Referenz auf für die Anwendung zulässige Schlüssel von Zusatz-Container-Images.

6. Verfahren nach Anspruch 5,
**dadurch gekennzeichnet, dass**
- der Orchestrator über eine Policy für Zusatz-Container verfügt; und
- dem Zusatz-Container-Image Privilegien nach Maßgabe dieser Policy zugewiesen werden.

7. Verfahren nach Anspruch 6,
umfassend die Schritte
a) Übergabe der signierten Deployment-Konfiguration, die für die Anwendung erstellt wurde, an den Orchestrator;
b) Validierung der Signatur der Deployment-Konfiguration gegen ein entsprechendes Zertifikat eines Signatur-Dienstes;
c) Validierung der dem Haupt-Container zugewiesenen Privilegien gegen die verwendete Policy;
d) Überprüfung, ob die Deployment-Konfiguration einen Zusatz-Container mit Schlüssel und Signatur umfasst;
e) bei Vorliegen eines Zusatz-Containers, Durchführung eines Abgleichs der Signatur mit einem zugehörigen Zertifikat zur Überprüfung, ob der Schlüssel legitim ist; und
f) Validierung der Privilegien des Zusatz-Containers gegen die entsprechende Policy.

8. Verfahren nach Anspruch 5,
**dadurch gekennzeichnet, dass**
- dem Zusatz-Container-Image Privilegien nach Maßgabe einer Voreinstellung für Zusatz-Container zugewiesen werden.

9. Verfahren nach einem der Ansprüche 1 bis 8,
**dadurch gekennzeichnet, dass**
eine Fehlermeldung ausgegeben wird, wenn die Validierung der Zulässigkeit des Schlüssels zur Entschlüsselung des Zusatz-Container-Images nicht erfolgreich ist.

10. Deployment-Konfiguration oder Applikationsbündel, welche bzw. welches nach einem Verfahren nach einem der Ansprüche 1 bis 4 erhalten wurde.

11. Orchestrator, welcher zur Durchführung eines Verfahrens nach einem der Ansprüche 5 bis 9 ausgestaltet ist.
